# EUROPEAN PATENT SPECIFICATION

(11) **EP 1 829 737 B1**
(45) Date of publication and mention of the grant of the patent: **18.05.2011**
(21) Application number: 05800354.2
(22) Date of filing: 28.09.2005
(51) Int. Cl.: B60N 2/28, B60R 22/10

(54) **SAFETY DEVICE FOR CHILD SEATS FOR VEHICLES**
SICHERHEITSVORRICHTUNG FÜR KINDERSITZE FÜR FAHRZEUGE
DISPOSITIF DE SECURITE POUR DES SIEGES POUR ENFANTS DESTINE A DES VEHICULES

(30) Priority: 25.11.2004 ES 200402694 U
(43) Date of publication of application: 05.09.2007
(73) Proprietor: Jané S.A., 08184 Palau de Plegamans (Barcelona) (ES)
(72) Inventor: JANE SANTAMARIA, Manuel, c/o Jane, S.A., E-08184 Palau de Plegamans (Barcelona) (ES)
(74) Representative: Pastells Teixido, Manuel
(86) International application number: PCT/ES2005/000522
(87) International publication number: WO 2006/058930

(56) References cited:
- EP-A2- 0 383 473
- WO-A1-99/30935
- WO-A1-99/37499
- CA-A- 1 012 050
- NL-A- 9 500 024
- NL-A- 9 500 024
- US-A- 4 040 664
- US-A- 4 580 842
- US-A1- 2002 070 593
- US-A1- 2003 071 511

## Description

### BACKGROUND OF THE INVENTION

Different models of this kind of infant chairs are already known, said infant chairs in order to securely fasten the child to the seat comprising a strapping being formed by two adjustable straps being linked through a buckle to a crotch strip, said straps being joined to each other at the rear portion of the backrest and thereby forming a length passing through a tension device and extending beyond the front portion of the seat of the chair.

Among this sort of infant chairs where the child is held by strips there are the following patents :

Dutch patent no. 9500024, where the strips of the belts in their lower end go through the gasp of the seat and by their free ends they are fixed to a tensor roller where they wind, whose axle stands out in the front part of the seat, ending with a control.

US patent no. 2002/0070593, where the strips, as stated in the a.m. Dutch patent, go through the seat and they fit to a tensor roller by their free end, whose axle stands out by a side of the seat where a control is .

EP 0383473, where the strips in their lower end are linked to a buckle and the belt, by its two ends, fits into a tensor device with a control with stands out in the front part of the seat.

### SUMMARY OF THE INVENTION

It is the object of this invention to improve these safety devices by limiting the relative elasticity being displayed by the straps so that they are hence in a position to better hold back the child on the chair in case of a collision.

In order to achieve this limitation of the elasticity the total length of the straps has been reduced, it having been for such a purpose foreseen to carry out their tensioning at their lower ends being guidedly passed through the buckle and extending through the chair to be thereupon joined together underneath this latter and thus form the strip that passes through the tension device and extends beyond the front portion of the seat of the chair.

The lower ends of the straps are joined together by means of guiding elements being adapted to have them arranged in a mutually juxtaposed arrangement at a central length before their being joined together.

The adjustment of the straps is carried out with anchoring means being provided on the rear surface of the backrest of the chair.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Figs. 1a and 1b diagrammatically depict in a sectional elevation a conventional safety device and the one being the object of the invention, respectively;
Fig. 2 frontally shows an infant chair being provided with the safety device in question; and
Fig. 3 illustrates in a perspective view a detail of the guiding means being adapted to bring the lower ends of the straps together.

### DETAILED DESCRIPTION

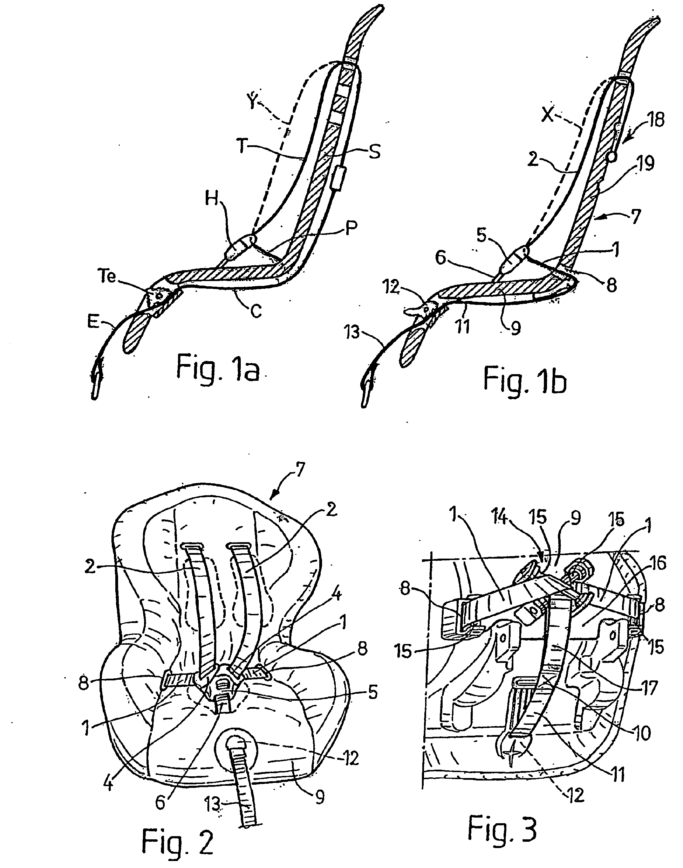

According to Fig. 1a the conventional devices have their straps (T) joined together at the rear and thus form a band (C) extending at the rear portion of the chair and thereupon passing through a tension device (Te), and the end (E) of the band extends beyond the front portion of the seat of the chair (S). At their lower end the straps (T) are fitted to a buckle (H) and are fixedly fastened at lateral points (P) of the seat of the chair (S).

According to Figs. 1b, 2 and 3 the safety device being the object of the invention is characterised in that the lower ends (1) of the straps (2), after having passed through slits (4) of the buckle (5) to which the crotch strip (6) is attached, extend through the chair (7) through openings (8) being provided at the rear portion of the sides of the seat (9) of the chair and are joined together at (10) underneath this latter thereby forming a strip (11) that passes through the tension device (12) and with its end (13) extends beyond the front portion of the seat (9) of the chair.

Before being joined together the lower ends (1) of the two straps (2) pass through an assembly (14) of guiding elements, these latter being made up by rollers (15) being supported on a plate (16) being fixedly attached to the bottom of the seat (9), said rollers being adapted to guide said opposite ends (1) at a common, central length (17) being attached to the strip (11).

The adjustment of the straps (2) is carried out with anchoring means (18) being provided on the rear surface of the backrest (19) of the chair.

Because of the shorter length of the straps (2) their extension (X) (Fig. 1b) being produced during a collision is reduced with respect to the extension (Y) (Fig. 1a) being produced in the straps (T) of the conventional safety devices, the child being thus held back in an improved manner.

The assembly (14) of the guiding means as well as the anchoring means (18) being provided at the rear ends of the straps for their adjustment can be carried out as per any other embodiments other than those having been depicted in these presents.

## Claims

1. A infant chair comprising a safety device being applicable to vehicles which comprises a strapping being formed by two adjustable straps (2) being linked through a buckle to a crotch strip (6) and has tensioning device (12) for the tensioning of said straps (2), **characterised in that** the lower ends (1) of the straps (2) extend through opening (8) through the chair (7), pass through an assembly (14) of guiding elements consisting of two rollers (15) at a common central length (17) joined together at (10), under the chair (7), thereby forming a strip (11) that passes through the tension device (12) and extends beyond the front portion of the seat (9) of the chair.

2. An infant chair as in claim 1, **characterised in that** the adjustment of the straps (2) is carried out with anchoring means (18) being provided on the rear surface of the backrest (19) of the chair.

## Patentansprüche

1. Kindersitz mit Sicherheitsvorrichtung für die Verwendung in Kraftfahrzeugen, bestehend aus einem Gurtsystem, das zwei verstellbare Gurte (2), die über ein Gurtschloss mit einem Schrittgurt (6) verbunden sind, und eine Spannvorrichtung (12) zum Strammziehen der Gurte (2) aufweist, **dadurch gekennzeichnet, dass** sich die unteren Enden (1) der Gurte (2) durch eine Öffnung (8) im Kindersitz (7) erstrecken und durch eine aus zwei Rollen (15) bestehende Anordnung (14) von Führungselementen hindurchgleiten, wobei sie an einer gemeinsamen mittleren Länge (17) unter dem Kindersitz (7) an (10) zusammengefügt sind und **dadurch** ein Band (11) bilden, das durch die Spannvorrichtung (12) hindurchführt und sich über den vorderen Teil der Sitzfläche (9) des Kindersitzes hinaus erstreckt.

2. Kindersitz nach Anspruch 1, **dadurch gekennzeichnet, dass** die Verstellung der Gurte (2) mit Befestigungsmitteln (18) erfolgt, die an der Rückseite der Rückenlehne (19) des Kindersitzes vorgesehen sind.

## Revendications

1. Un siège pour enfants comprenant un dispositif de sécurité applicable à des véhicules qui comprend une sangle composée de deux courroies ajustables (2) qui sont reliées à travers une boucle à une bande d'entrejambe (6), et qui présente un dispositif de tension (12) pour tendre lesdites courroies (2), **caractérisé en ce que** les extrémités inférieures (1) des courroies (2) se prolongent à travers une ouverture (8) sur le siège (7), passent à travers un ensemble (14) d'éléments de guidage consistant dans deux rouleaux à une longueur centrale commune (17) unis à (10), sous le siège (7), formant alors une bande (11) qui passe à travers le dispositif de tension (12) et se prolonge au-delà de la partie avant du siège (9) du siège pour enfants.

2. Un siège pour enfants comme indiqué dans la revendication 1, **caractérisé en ce que** l'ajustement des courroies (2) est réalisé par des moyens de fixation (18) situés sur la surface arrière du dossier (9) du siège.
